# FASCICULE DE BREVET EUROPEEN

(11) **EP 0 326 775 B1**
(45) Date de publication et mention de la délivrance du brevet: **12.03.1997**
(21) Numéro de dépôt: 88403345.7
(22) Date de dépôt: 28.12.1988
(51) Int. Cl.: C08K 3/22, C08L 23/02, H01B 3/44

(54) **Compositions polymères ignifugées et leur application au revêtement de câbles électriques**
Selbstverlöschende polymere Zusammensetzungen und deren Anwendung für elektrische Kabelisolation
Ignifuge polymer compositions and their use as electrical cable insulations

(30) Priorité: 30.12.1987 FR 8718394
(43) Date de publication de la demande: 09.08.1989
(73) Titulaire: ELF ATOCHEM S.A., 92800 Puteaux (FR)
(72) Inventeur: Breant, Patrice, F-62400 Bethune (FR)
(74) Mandataire: Rochet, Michel

(56) Documents cités:
- EP-A- 0 082 407
- EP-A- 0 158 422
- EP-A- 0 212 142
- DE-A- 3 605 848
- GB-A- 2 041 960
- GB-A- 2 190 384

## Description

La présente invention concerne des compositions polymères ignifugées contenant des copolymères de l'éthylène. Plus particulièrement ces compositions ne contiennent pas de dérivés halogénés et sont aptes à être transformées par des techniques classiques en articles résistant bien au feu tels que notamment les revêtements isolants pour câbles métalliques.

L'amélioration de la tenue au feu des compositions contenant des matières polymères est un objectif constant des fabricants et transformateurs de ces matières, visant à obtenir une réduction notable de l'inflammabilité et de l'aptitude à la propagation des flammes de ces matériaux. L'utilisation de dérivés halogénés comme agents d'ignifugation est bien connue mais présente le grand inconvénient de conduire, lors de la combustion, à des gaz toxiques et corrosifs. Les fabricants et transformateurs se sont alors dirigés vers la mise au point de compositions contenant des oxydes, hydroxydes ou sels minéraux de métaux tels que les hydrates d'alumine et de magnésie.

Cependant l'ajout de telles charges minérales en quantité suffisante pour obtenir une bonne résistance au feu conduit à des matériaux présentant des propriétés mécaniques médiocres et/ou de grandes difficultés de transformation par les méthodes classiques telles que l'extrusion. Ainsi l'addition de fortes quantités d'hydrate d'alumine à un copolymère éthylène/acétate de vinyle conduit à une composition dont les propriétés mécaniques sont très inférieures à celles dudit copolymère. On peut alors améliorer ces propriétés mécaniques par addition complémentaire, par exemple, d'un copolymère d'éthylène et d'au moins une α-oléfine, mais la tenue au feu se dégrade, ce qui oblige à augmenter la teneur en hydrate d'alumine d'où il s'ensuit une nouvelle diminution des propriétés mécaniques.

Le problème que la présente invention vise à résoudre est de définir des compositions polymères ignifugées au moyen de composés tels que les hydrates d'alumine ou magnésie et qui possèdent simultanément une bonne résistance au feu, des propriétés mécaniques et une facilité de mise en oeuvre acceptables, c'est-à-dire non exagérément diminuées par rapport à celles des compositions ne contenant pas d'agent ignifugeant. Les différents constituants doivent présenter une bonne compatibilité pour que les compositions puissent être mises en oeuvre sans difficultés.

Ce problème peut être résolu au moyen des compositions selon l'invention.

Un premier objet de la présente invention consiste en des composi40 tions polymères ignifugées comprenant une charge minérale hydratée, au moins un copolymère éthylène/acétate de vinyle et au moins un copolymère d'éthylène et d'au moins une α -oléfine, caractérisées en ce qu'elles sont constituées essentiellement de 120 à 240 parties en poids de charge minérale hydratée pour 100 parties en poids d'une phase polymérique constituée :
a) de 15 à 55 parties en poids d'au moins un copolymère éthylène/acétate de vinyle (A) ayant une teneur en acétate de vinyle comprise entre 20 et 50% en poids,
b) de 25 à 62 parties en poids d'au moins un terpolymère éthylène/(méth)acrylate d'alkyle/anhydride d'acide dicarboxylique insaturé (B),
c) de 8 à 45 parties en poids d'au moins un copolymère d'éthylène et d'au moins une α-oléfine (C) ayant une densité comprise entre 0,880 et 0,915 et un taux de cristallinité au moins égal à 5 %, et
d) de 0 à 5 parties en poids d'au moins un polyéthylène basse densité (D).

Comme exemples de charges minérales hydratées utilisables dans les compositions selon l'invention, on peut citer des hydroxydes d'aluminium Al(OH)₃ et de magnésium Mg(OH)₂, par exemple de granulométrie moyenne avantageusement comprise entre 0,5 et 2 µm.

Les copolymères éthylène/acétate de vinyle (A) sont généralement obtenus par copolymérisation sous pression élevée et à haute température en présence d'initiateurs de radicaux libres.

Par terpolymère (B) éthylène/(méth)acrylate d'alkyle/anhydride d'acide dicarboxylique insaturé on entend de préférence, selon la présente invention, un composé comprenant :
- de 83 à 98,7 % en moles de motifs dérivés de l'éthylène,
- de 1 à 14 % en moles de motifs dérivés d'au moins un ester de l'acide acrylique et/ou méthacrylique, et
- de 0,3 à 3% en moles de motifs dérivés d'un anhydride d'acide dicarboxylique insaturé tel que, par exemple, l'anhydride maléique.

L'indice de fluidité du terpolymère (B), mesuré dans les conditions standards (190°C, charge de 2,16 kg) de la norme ASTM D-1238, est avantageusement compris entre 1 et 10 dg/min.

Ce terpolymère peut être obtenu par exemple dans les conditions décrites dans les documents FR-A-2498609, FR-A-2569411 et FR-A-2569412. L'ester de l'acide acrylique ou méthacrylique, comporte de préférence un groupe alkyle de 1 à 8 atomes de carbone. A titre d'exemples on peut citer les acrylates et méthacrylates de méthyle, d'éthyle, de n-propyle, d'isopropyle, de n-butyle, d'iso-butyle, de n-pentyle, de n-hexyle, d'éthyl-2-hexyle, de n-octyle, de cyclohexyle.

Le copolymère (C) d'éthylène et d'au moins une α-oléfine est obtenu par copolymérisation, en présence de systèmes catalytiques de type Ziegler. Il a généralement un indice de fluidité standard (tel que défini précédemment) compris entre 1 et 5 dg/min.

Le polyéthylène basse densité (D) est obtenu par homopolymérisation de l'éthylène à température élevée (généralement 140 à 350°C) et sous haute pression (généralement 1000 à 4000 bars) en présence d'un initiateur de radicaux libres (tel que l'oxygène, les peroxydes ou les peresters). Sa densité est généralement comprise entre 0,915 et 0,935, et il a un indice de fluidité standard (tel que défini précédemment) avantageusement compris entre 1 et 10 dg/min.

Parmi les compositions selon l'invention, celles qui contiennent :
a) de 20 à 55 parties en poids de copolymère (A)
b) de 26 à 52 parties en poids de terpolymère (B)
c) de 13 à 42 parties en poids de copolymère (C)
d) de 0 à 3 parties en poids de polyéthylène (D) pour 100 parties en poids de phase polymérique sont particulièrement avantageuses.

Sont plus particulièrement préférées celles qui contiennent, pour 100 parties en poids de phase polymérique :
a) de 30 à 40 parties en poids de copolymère (A)
b) de 35 à 45 parties en poids de terpolymère (8)
c) de 23 à 33 parties en poids de copolymère (C)

Les compositions selon l'invention ont généralement un indice limite d'oxygène (tel que défini ci-après) d'au moins 35%, un allongement à la rupture d'au moins 110 % et une résistance à la rupture d'au moins 11 MPa.

Les compositions selon l'invention peuvent être préparées par malaxage des ingrédients sous forme de poudre ou granulés de façon à obtenir un mélange homogène prêt à l'emploi.

Elles peuvent être également préparées par malaxage puis fusion et granulation des constituants de la phase polymèrique. Les granulés obtenus sont ensuite malaxés avec la quantité voulue d'agent ignifugeant dans le but de fournir un mélange homogène prêt à l'emploi.

Enfin les compositions peuvent être préparées par malaxage de tous les constituants, ceux de la phase polymérique étant à l'état fondu, puis extrusion et granulation. L'extrusion peut également être réalisée sur une coextrudeuse ; les compositions dans lesquelles la phase polymérique est à l'état fondu et la charge minérale hydratée régulièrement dispersée, peuvent alors être directement transformées, par exemple en revêtement de câble métallique.

Un second objet de la présente invention concerne des articles industriels comprenant une composition telle que décrite ci-dessus. Plus particulièrement ces articles industriels consistent en un revêtement de câble électrique.

Outre cette application en câblerie, les compositions selon l'invention trouvent d'autres applications où leur caractère de résistance au feu et leurs bonnes propriétés mécaniques sont requises. Elles ont l'avantage d'être transformables en articles industriels (feuilles, plaques, profilés, corps creux, tubes, tuyaux), présentant une résistance au feu améliorée, par les techniques classiques de transformation des polyoléfines (extrusion, injection, roto-moulage).

Les exemples suivants ont pour but d'illustrer l'invention de façon non limitative.

Toutes les compositions sont préparées en réalisant un mélange des différents constituants à l'état de poudres ou granulés dans un mélangeur interne, dans lequel les constituants polymères sont fondus, puis en extrudant le mélange au moyen d'une extrudeuse bi-vis à une température de 145°C. Toutes contiennent 150 parties en poids d'hydrate d'alumine Al(OH)₃ de granulométrie moyenne 1 µm.

Les propriétés suivantes sont mesurées sur les compositions extrudées :
- la résistance à la rupture (RR) déterminée selon la norme ASTM D-638 et exprimée en Mégapascals (MPa),
- l'allongement à la rupture (AR) déterminée selon la norme ASTM D-638 et exprimée en %,
- l'indice limité d'oxygène (IOL) déterminé selon la norme ASTM D-2863 et exprimé en %.

### EXEMPLES 1 à 4 (comparatifs)

Les compositions ont été préparées en utilisant les constituants suivants :
- un copolymère éthylène/acétate de vinyle (A) ayant une teneur de 28% en poids d'acétate de vinyle, un indice de fluidité (mesuré selon la norme ASTM D-1238 à 190°C sous une charge de 2,16 kg) égal à 7 dg/min, commercialisé sous la dénomination ESCORENE UL 00728,
- un terpolymère éthylène/acrylate de n-butyle/anhydride maléïque (B) contenant 97,8 % en moles d'unités dérivées de l'éthylène, 1,2 % en moles d'unités dérivées de l'acrylate de n-butyle et 1 % en moles d'unités dérivés de l'anhydride maléïque, commercialisé par la société NORSOLOR sous la dénomination LOTADER LX 4110,
- un copolymère éthylène/butène-1 (C) ayant une densité de 0,910, un indice de fluidité (mesuré selon la norme ASTM D-1238 à 190°C sous une charge de 2,16 kg) de 2,7 dg/min., commercialisé par la société NORSOLOR sous la dénomination NORSOFLEX LW 2220,

On a indiqué dans le tableau I les quantités en parties en poids de constituants utilisées pour préparer les compositions et les résultats des mesures de leurs propriétés.

Aucune des compositions-témoins ne possède simultanément un ensemble de propriétés satisfaisantes. Notamment leur allongement à la rupture est insuffisant pour applications envisagées.

**TABLEAU I**

| Exemple | (A) | (B) | (C) | RR | AR | IOL |
|---|---|---|---|---|---|---|
| 1 | 100 | - | - | 7 | 100 | 33 |
| 2 | - | 100 | - | 14 | 70 | 31 |
| 3 | - | - | 100 | 12 | 90 | 28 |
| 4 | 50 | - | 50 | 9 | 60 | 29 |

### EXEMPLES 5 à 13

On a utilisé les mêmes constituants qu'aux exemples comparatifs 1 à 4, selon les quantités figurant au tableau II en parties en poids.

Les résultats des mesures effectuées figurent également au tableau II.

**TABLEAU II**

| Exemple | (A) | (B) | (C) | RR | AR | IOL |
|---|---|---|---|---|---|---|
| 5 | 33 | 33 | 34 | 12 | 124 | 36 |
| 6 | 15 | 62 | 23 | 14 | 110 | 37 |
| 7 | 30 | 62 | 8 | 13 | 110 | 37 |
| 8 | 55 | 37 | 8 | 11 | 115 | 37 |
| 9 | 55 | 25 | 20 | 11 | 120 | 36 |
| 10 | 30 | 25 | 45 | 12 | 116 | 35 |
| 11 | 15 | 40 | 45 | 14 | 115 | 37 |
| 12 | 34 | 39 | 27 | 13 | 125 | 37 |
| 13 | 40 | 50 | 10 | 13 | 116 | 37 |

## Revendications

1. Compositions polymères ignifugées comprenant une charge minérale hydratée, au moins un copolymère éthylène/acétate de vinyle et au moins un copolymère d'éthylène et d'au moins une α -oléfine, caractérisées en ce qu'elles sont constituées essentiellement de 120 à 240 parties en poids de charge minérale hydratée pour 100 parties en poids d'une phase polymérique constituée :
a) de 15 à 55 parties en poids d'au moins un copolymère éthylène/acétate de vinyle (A) ayant une teneur en acétate de vinyle comprise entre 20 et 50% en poids,
b) de 25 à 62 parties en poids d'au moins un terpolymère éthylène/(méth)acrylate d'alkyle/anhydride d'acide dicarboxylique insaturé (B),
c) de 8 à 45 parties en poids d'au moins un copolymère d'éthylène et d'au moins une α-oléfine (C) ayant une densité comprise entre 0,880 et 0,915 et un taux de cristallinité au moins égal à 5 %, et
d) de 0 à 5 parties en poids d'au moins un polyéthylène basse densité (D).

2. Compositions selon la revendication 1 caractérisées en ce qu'elles contiennent, pour 100 parties en poids de phase polymérique :
a) de 20 à 55 parties en poids de copolymère (A)
b) de 20 à 52 parties en poids de terpolymère (B)
c) de 13 à 42 parties en poids de copolymère (C)
d) de 0 à 3 parties en poids de polyéthylène (D)

3. Compositions selon la revendication 1 caractérisées en ce qu'elles contiennent, pour 100 parties en poids de phase polymérique :
a) de 30 à 40 parties en poids de copolymère (A)
b) de 35 à 45 parties en poids de terpolymère (B)
c) de 23 à 33 parties en poids de copolymère (C)

4. Compositions selon l'une des revendications 1 à 3 caractérisées en ce que, la charge minérale hydratée est l'hydrate d'alumine utilisé à raison de 150 parties en poids pour 100 parties de phase polymérique.

5. Compositions selon l'une des revendications 1 à 4 caractérisées en ce que le copolymère (A) contient environ 28% en poids de motifs dérivés de l'acétate de vinyle.

6. Compositions selon l'une des revendications 1 à 5 caractérisées en ce que le terpolymère (B) comprend :
- de 83 à 98,7 % en moles de motifs dérivés de l'éthylène,
- de 1 à 14 % en moles de motifs dérivés d'au moins un ester de l'acide acrylique et/ou méthacrylique, et
- de 0,3 à 3% en moles de motifs dérivés d'un anhydride d'acide dicarboxylique insaturé.

7. Compositions selon l'une des revendications 1 à 6 caractérisées en ce que le terpolymère (B) a un indice de fluidité standard compris entre 1 et 10 dg/min.

8. Compositions selon l'une des revendications 1 à 7 caractérisées en ce que le copolymère (C) a un indice de fluidité standard compris entre 1 et 5 dg/min.

9. Articles industriels comprenant une composition conforme à l'une des revendications 1 à 9.

10. Articles industriels selon la revendication 10, caractérisés en ce qu'ils consistent en un revêtement de câble électrique.

## Patentansprüche

1. Feuersichere polymere Zusammensetzungen, enthaltend einen hydratisierten mineralischen Füllstoff, mindestens ein Ethylen/Vinylacetat-Copolymer und mindestens ein Copolymer von Ethylen und mindestens einem α-olefin, dadurch gekennzeichnet, daß sie im wesentlichen aus 120 bis 240 Gew.-Teilen eines hydratisierten mineralischen Füllstoffs auf 100 Gew.-Teile einer Polymerphase bestehen, die besteht aus:
a) 15 bis 55 Gew.-Teilen mindestens eines Ethylen/Vinylacetat-Copolymers (A) mit einem Gehalt an Vinylacetat zwischen 20 und 50 Gew.-%,
b)25 bis 62 Gew.-Teilen mindestens eines Terpolymers aus Ethylen/Alkyl(meth)acrylat/ungesättigtes Dicarbonsäureanhydrid (B),
c) 8 bis 45 Gew.-Teilen mindestens eines Copolymers aus Ethylen und mindestens einem α-Olefin (C) mit einer Dichte zwischen 0,880 und 0,915 und einem Kristallinitätsgrad von mindestens gleich 5 %, und
d) 0 bis 5 Gew.-Teilen mindestens eines Polyethylens mit geringer Dichte (D).

2. Zusammensetzungen nach Anspruch 1, dadurch gekennzeichnet, daß sie auf 100 Gew.-Teile der Polymerphase enthalten:
a) 20 bis 55 Gew.-Teile des Copolymers (A)
b) 26 bis 52 Gew.-Teile des Terpolymers (B)
c) 13 bis 42 Gew.-Teile des Copolymers (C)
d) 0 bis 3 Gew.-Teile des Polyethylens (D).

3. Zusammensetzungen nach Anspruch 1, dadurch gekennzeichnet, daß sie auf 100 Gew.-Teile der Polymerphase enthalten:
a) 30 bis 40 Gew.-Teile des Copolymers (A)
b) 35 bis 45 Gew.-Teile des Terpolymers (B)
c) 23 bis 33 Gew.-Teile des Copolymers (C).

4. Zusammensetzungen nach einem der Ansprüche bis 3, dadurch gekennzeichnet, daß der hydratisierte mineralische Füllstoff Aluminiumoxidhydrat ist, das in einer Menge von 150 Gew.-Teilen pro 100 Teilen der Polymerphase eingesetzt wird.

5. Zusammensetzungen nach einem der Ansprüche 1 bis 4, dadurch gekennzeichnet, daß das Copolymer (A) etwa 28 Gew.-% von von Vinylacetat abgeleiteten Einheiten enthält.

6. Zusammensetzungen nach einem der Ansprüche 1 bis 5, dadurch gekennzeichnet, daß das Terpolymere (B) enthält:
- 83 bis 98,7 Mol-% von von Ethylen abgeleiteten Einheiten,
- 1 bis 14 Mol-% von Einheiten, die sich von mindestens einem Ester der Acryl- und/oder Methacrylsäure ableiten, und
- 0,3 bis 3 Mol-% von Einheiten, die sich von einem Anhydrid einer ungesättigten Dicarbonsäure ableiten.

7. Zusammensetzungen nach einem der Ansprüche 1 bis 6, dadurch gekennzeichnet, daß das Terpolymer (B) eine Standardweichheitszahl zwischen 1 und 10 dg/min besitzt.

8. Zusammensetzungen nach einem der Ansprüche 1 bis 7, dadurch gekennzeichnet, daß das Copolymere (C) eine Standardweichheitszahl zwischen 1 und 5 dg/min besitzt.

9. Industrieartikel, enthaltend eine Zusammensetzung nach einem der Ansprüche 1 bis 9.

10. Industrieartikel nach Anspruch 10, dadurch gekennzeichnet, daß sie in einer Ummantelung für ein elektrisches Kabel bestehen.

## Claims

1. Flame-retarded polymer compositions comprising a hydrated inorganic filler, at least one ethylene/vinyl acetate copolymer and at least one copolymer of ethylene and of at least one α-olefin, characterized in that they consist essentially of 120 to 240 parts by weight of hydrated inorganic filler per 100 parts by weight of a polymeric phase constituted:
a) of 15 to 55 parts by weight of at least one ethylene/vinyl acetate copolymer (A) having a vinyl acetate content of between 20 and 50 % by weight,
b) of 25 to 62 parts by weight of at least one ethylene/alkyl (meth)acrylate/unsaturated dicarboxylic acid anhydride terpolymer (B),
c) of 8 to 45 parts by weight of at least one copolymer of ethylene and at least one α-olefin (C) having a density of between 0.880 and 0.915 and a crystallinity level at least equal to 5 %, and
d) of 0 to 5 parts by weight of at least one low density polyethylene (D).

2. Compositions according to Claim 1, characterized in that they contain, per 100 parts by weight of polymeric phase:
a) from 20 to 55 parts by weight of copolymer (A)
b) from 26 to 52 parts by weight of terpolymer (B)
c) from 13 to 42 parts by weight of copolymer (C)
d) from 0 to 3 parts by weight of polyethylene (D)

3. Compositions according to Claim 1, characterized in they contain, per 100 parts by weight of polymeric phase:
a) from 30 to 40 parts by weight of copolymer (A)
b) from 35 to 45 parts by weight of terpolymer (B)
c) from 23 to 33 parts by weight of copolymer (C)

4. Compositions according to one of Claims 1 to 3, characterized in that the hydrated inorganic filler is alumina hydrate used at a rate of 150 parts by weight per 100 parts of polymeric phase.

5. Compositions according to one of Claims 1 to 4, characterized in that the copolymer (A) contains about 28 % by weight of residues derived from vinyl acetate.

6. Compositions according to one of Claims 1 to 5, characterized in that the terpolymer (B) comprises:
- from 83 to 98.7 mole % of residues derived from ethylene,
- from 1 to 14 mole % of residues derived from at least one ester of acrylic and/or methacrylic acid, and
- from 0.3 to 3 mole % of residues derived from an unsaturated dicarboxylic acid anhydride.

7. Compositions according to one of Claims 1 to 6, characterized in that the terpolymer (B) has a standard melt index of between 1 and 10 dg/min.

8. Compositions according to one of Claims 1 to 7, characterized in that the copolymer (C) has a standard melt index of between 1 and 5 dg/min.

9. Industrial articles containing a composition according to one of Claims 1 to 8.

10. Industrial articles according to Claim 9, characterized in that they consist of an electrical cable sheath.
